# EUROPEAN PATENT APPLICATION

(11) **EP 4 390 152 A1**
(43) Date of publication of application: **26.06.2024**
(21) Application number: 22214833.0
(22) Date of filing: 20.12.2022
(51) Int. Cl.: F16B 5/06, F16L 37/133, F24F 13/02

(54) **ASSEMBLY OF A FIRST PART AND A SECOND PART CONNECTED TO EACH OTHER AND AIR DUCT SYSTEM COMPRISING SUCH AN ASSEMBLY**

(71) Applicant: Danfoss A/S, 6430 Nordborg (DK)
(72) Inventor: Clausen, Anders Østergaard, 6430 Nordborg (DK)
(74) Representative: Keil & Schaafhausen Patentanwälte PartGmbB

(57) **Abstract**

An assembly (1) of a first part (2) and a second part (3) connected to each other is described, wherein the first part (2) comprises an outer surface (4) at least one protrusion (5) having an abutment surface (6) on a side opposite the second part (3) and the second part (3) comprises a bracket (7).

Such an assembly should have a connection which is easy to operate, strong and cheap.

To this end the bracket (7) comprises a base (8) connected to the second part (3) by at least one leg (9, 10), wherein at least one tongue (11) extends from the base (8) towards the second part (3), and an end of the at least one tongue (11) remote from the base (8) rests against the at least one abutment surface (6), and a distance between an end of the base (8) directed towards the second part (3) and the at least one abutment surface (6) is smaller than the length of the at least one tongue (11) in an unmounted condition.

## Description

The present invention relates to an assembly of a first part and a second part connected to each other, wherein the first part comprises on an outer surface at least one protrusion having an abutment surface on a side opposite the second part and the second part comprises a bracket.

Furthermore, the present application relates to an air duct system comprising such an assembly.

In a known assembly of this kind the bracket is hinged to a lever, which in turn is hinged to the second part. When the second part is to be connected to the first part the lever is lifted so that the bracket can be brought into a position in which it can contact the abutment surface of the protrusion of the first part. The lever is then lowered to the second part and the connection is tightened.

Such a construction has the drawback that a plurality of parts has to be assembled and mounting is quite complicated.

The object underlying the invention is to have a connection which is easy to operate, strong and cheap.

This object is solved with an assembly as described at the outset in that the bracket comprises a base connected to the second part by at least one leg, wherein at least one tongue extends from the base towards the second part, an end of the at least one tongue remote from the base rests against the at least one abutment surface, and a distance between an end of the base directed towards the second part and the at least one abutment surface is smaller than the length of the at least one tongue in an unmounted condition.

The bracket comprises some deformable sections so that the tongue can be positioned on the side of the protrusion opposite to the second part. When the end of the tongue remote from the base rests against the abutment surface, there is a certain tension with which the second part is drawn against the first part. Thus, the invention forms a simple snap making a compression of two parts and maintaining the compression.

In an embodiment of the invention the bracket is integrally formed with the second part. Such a construction has the advantage, that only a single part is needed, namely the bracket which is made in one part with the second part. No extra parts are necessary which have to be assembled. No parts of the connection means can get lost.

In an embodiment of the invention in an unconnected state the tongue is coplanar with the at least one leg. This facilitates the production of the second part in particular when it is integral with the bracket. Furthermore, the planar form of the tongue is the unloaded condition, so that when the tongue is curved or deformed in another way the forces trying to restore the planar form of the tongue produce the forces holding the first part and the second part together.

In an embodiment of the invention in an unconnected state the tongue can be bent in two directions with respect to the base and in particular in a connected state of the first part and the second part the bracket is curved. This facilitates mounting of the bracket to the protrusion. The tongue can be bent in one direction with respect to the base in order to guide it over the protrusion. Once it has passed the protrusion, the tongue can be bent in the other direction with respect to the base, so that the base can be laid down on the outer surface of the first part and the bracket is pretensioned. The curvature of the tongue produces a pretension force, since the tongue due to the elasticity of the material of the tongue tends to straighten. Thus, the assembly of the first and the second part is strong and reliable.

In an embodiment of the invention the at least one leg can be bent. This again facilitates the mounting of the bracket. When the legs can be bent, the tongue can be guided over the protrusion.

In an embodiment of the invention the first part and the second part comprise a stop arrangement defining a predetermined position of the base in relation to the abutment surface in a connected state of the two parts. In other words, the first part and the second part can be drawn together until they reach a predefined relation to each other. No further movement of the second part towards the first part is possible. Thus, the bracket can produce the necessary tensioning forces in order to hold the two parts together.

In an embodiment of the invention the abutment surface comprises a hangout and the abutment surface is arranged between the hangout and the outer surface of the first part. The hangout prevents that the tongue moves away from the abutment surface.

In an embodiment of the invention the abutment surface is inclined towards the second part. Thus, when a hangout is used, the free end of the tongue is guided to the hangout, so that the free end of the tongue assumes a predetermined position at the abutment surface.

In an embodiment of the invention the first part and the second part comprise an overlapping area, wherein an inner surface of one of the parts and an outer surface of the other part are beveled to match each other. In other words, the two surfaces are sloped or inclined in a corresponding manner. When the two parts are mounted together, one beveled or sloped surface contacts the other beveled or sloped surface and when the two parts are pressed together, the slope down force presses the two surfaces together even more strongly.

In an embodiment of the invention the first part comprises a wall on the other surface surrounding at least the base. This wall prevents accidental loosing of the base from the outer surface of the first part.

In an embodiment of the invention the wall is formed by a border of a recess. In this case the base is placed in a recess, and it is very difficult to place a tool between the base and the outer surface of the first part in order to loosen the base and consequently the bracket from the first part.

In an embodiment of the invention the base comprises a depression on a side facing the outer surface, which depression is accessible from the outside. In this case it is possible to insert a tool into the depression in order to lift the base off the first part and to remove the bracket from the abutment surface.

The invention relates to an airduct system comprising an assembly as described above.

In an embodiment of the invention the two parts are air modules. The way in which the two parts are connected allows a flow of air with acceptable losses.

In an embodiment of the invention the connection between the two parts is airtight. In this case there is no loss of air of a flow of air flowing through the two parts. The two parts can be used in an air distributing system, for example for an air heating or cooling system, or a HVAc system.

Preferred embodiments of the invention will now be described with reference to the drawing, wherein:
- Fig. 1: shows two parts of an assembly separated from each other,
- Fig. 2: shows an assembly of a first part and a second part connected to each other,
- Fig. 3: shows a first step when connecting the two parts together,
- Fig. 4: shows a second step when connecting the two parts together,
- Fig. 5: shows a third step when connecting the two parts together,
- Fig. 6: shows the last step when connecting the two parts together,
- Fig. 7: shows a possibility to loosen the connection between the first part and the second part,
- Fig. 8: shows a second embodiment of the two parts separated from each other,
- Fig. 9: shows an assembly of the second embodiment, and
- Fig. 10: shows parts of an air duct system,
- Fig. 11: shows a second embodiment of a bracket and
- Fig. 12: shows a third embodiment of a bracket and the second part.

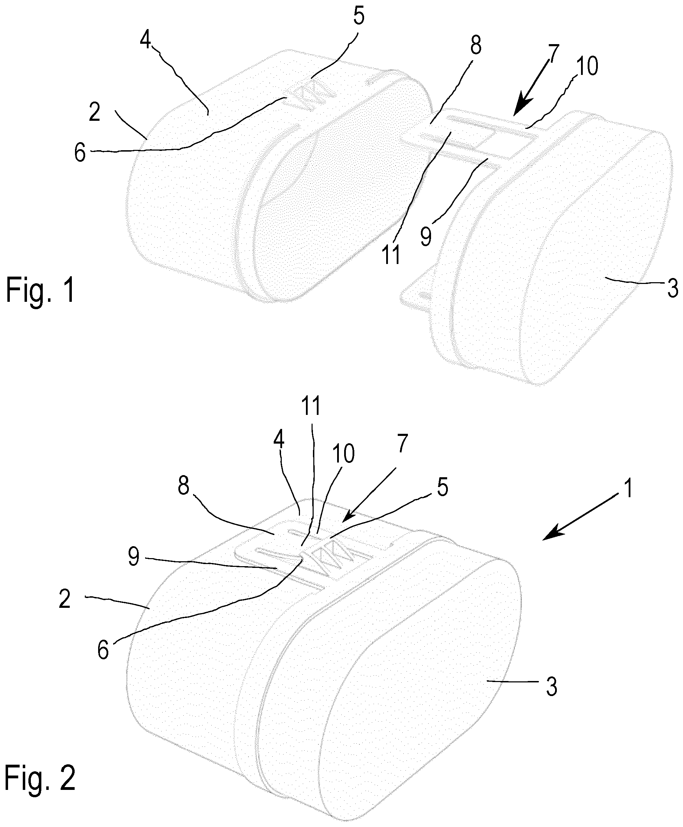

Fig. 2 shows an assembly 1 of a first part 2 and a second part 3 which are connected to each other. Fig. 1 shows the two parts 2, 3 separated.

The first part 2 comprises on an outer surface 4 and a protrusion 5 having an abutment surface 6 on a side opposite the second part 3. The second part 3 comprises a bracket 7 that embraces the protrusion 5.

In this embodiment, the bracket 7 is integrally formed with the second part 3 and comprises a base 8 connected to the second part 3 by legs 9, 10. A tongue 11 extends from the base 8 towards the second part 3. The tongue 11 is connected to the end of the base 8 directed to the second part 3.

As can be seen in Fig. 2, an end of the tongue 11 remote from the base 8 rests against the abutment surface 6 and a distance between an end of the base 8 directed towards the second part 3 and the abutment surface 6 is smaller than the length of the tongue 11 in an unmounted condition.

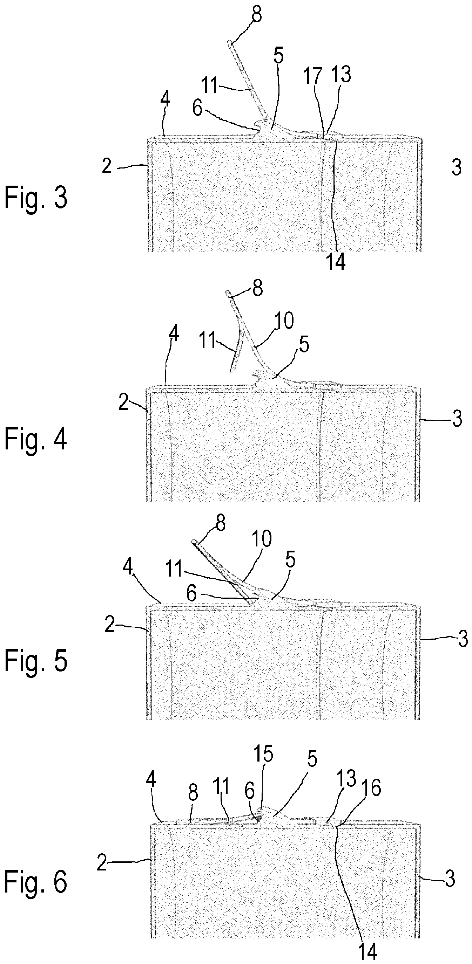

Mounting of the bracket 7 is described in more detail with reference to Fig. 3 to 6.

In all Fig. the same elements are denoted with the same reference numerals.

In a first step the first part 2 and the second part 3 are put together. The second part 3 comprises at the end face near the second part 2 an area 13 having an enlarged inner diameter forming a stop 14. An inner face of the area 13 is slightly sloped or bevelled.

The first part 2 comprises in this area an outer surface 17 which is sloped with the same angle as the inner surface of the area 13.

When the two parts 2, 3 are put together, the base 8 is moved away from the first part 2 which is possible, since the legs 9, 10 can be bent. The tongue 11 is moved over the protrusion 5 which is possible, since the tongue 11 can be bent in this direction with respect to the base. This is shown in Fig. 4.

Once the tongue 11 has passed the protrusion 5, the tongue 11 is released and moves back. However, it cannot assume a state in which it is coplanar with the base 8 and the legs 9, 10, as shown in Fig. 1, since the end of the tongue 11 contacts the outer surface 4 of the first part 2 and comes into contact with the abutment surface 6 of the protrusion 5. This is shown in Fig. 5.

As can be seen in Fig. 6, the base 8 has been pressed down to contact the outer surface 4 of the first part 2 and the tongue 11 is bent to the other side with respect to the base 8. However, it remains in contact with the abutment surface 6, since the protrusion 5 comprises a hangout 15 which is remote from the outer surface 4. The abutment surface 6 is positioned between the hangout 15 and the outer surface 4 of the first part 2. When the base 8 is pressed down on the first part 2, the end of the tongue 11 remote from the base 8 slides into a bent position against the hangout 15.

When the base 8 is pressed down onto the outer surface 4 of the first part 2, the tongue 11 produces a force drawing the second part 3 in a direction towards the first part 2 until the stop 14 contacts an end 16 of the first part 2 which is directed to the second part 3.

Since the inner side of the second part 3 and the outer side of the first part 2 are sloped in a corresponding manner, the slope down force which is produced by drawing the second part 3 towards the first part 2 presses the wall of the first part 2 and the wall of the second part 3 together more and more, so that the connection between the first part 2 and the second part 3 can be made airtight.

As can be seen in Fig. 6, the tongue 11 is bent or curved when the two parts 2, 3 are assembled. The degree of curvature determines the force with which the two parts 2, 3 are held together.

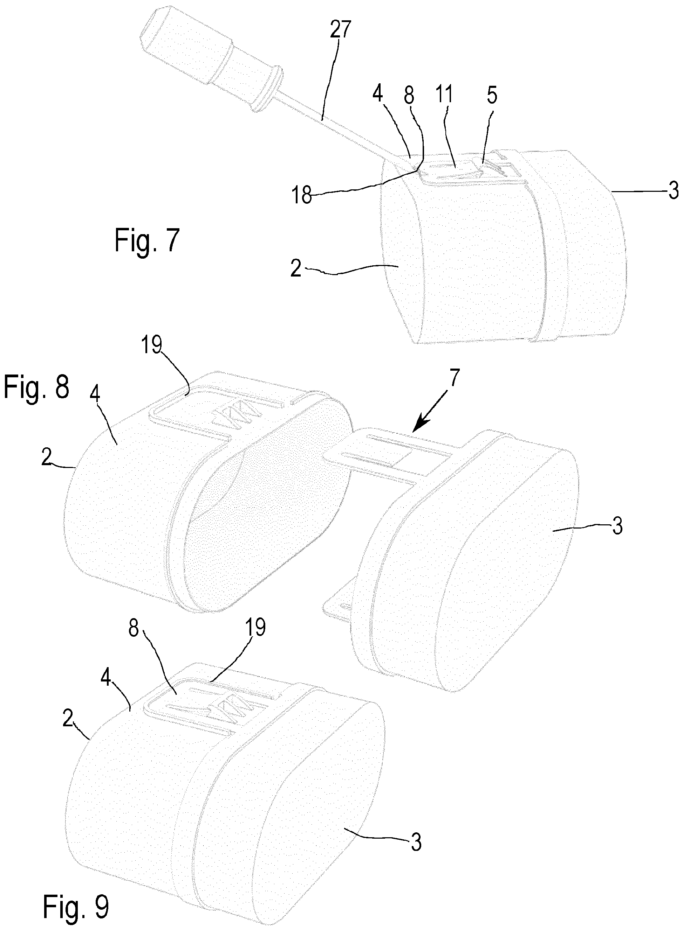

Fig. 7 shows a possibility how the connection between the first part 2 and the second part 3 can be released. A tool 27 can be inserted into a depression 18 which is arranged in the base 8 on a side facing the outer side 4 of the first part 2. The depression 18 is accessible from the outside, so that the tool 27 can be inserted. The base 8 can be levered out with the tool 27. Once the base 8 has been lifted off the outer surface 4 of the second part 3 in a sufficient way, the tongue 11 can be guided over the protrusion 5 and the second part 3 comes free from the first part 2.

When such a loosening is not intended, it is possible to arrange a wall 19 on the outer side 4 of the base 2. In a mounted condition (Fig. 9) the base 8 is surrounded by the wall 19, so that it is not possible to insert a tool 27 between the base and the outer side 4 of the first part 2. In the embodiment shown the wall 19 is placed on the outer side 4 of the first part 2. It is, however, also possible to provide a recess on the outer side 4 of the first part 2 so that the border of the recess forms the wall 19.

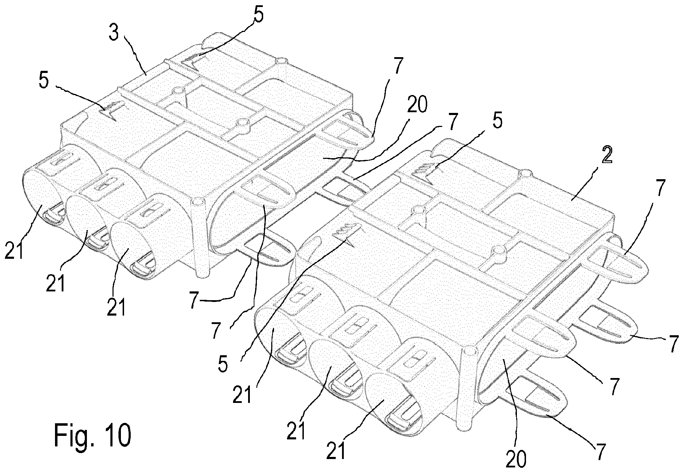

Fig. 10 shows the two parts 2, 3 as air modules of an air duct system.

Part 2 comprises the protrusion 5 and part 3 comprises the bracket 7.

Each of the parts 2, 3 form an air channel 20. Ports 21 branch of the air channel 20, so that each part 2, 3 can be used to distribute a flow of air flowing through the air channel 20 to different rooms or other locations.

In order to achieve a tight connection between parts 2, 3 the bracket 7 of the second part 3 is mounted to the protrusion 5 of first part 2. In this way, the two parts 2, 3 can be connected to each other in an airtight manner.

As can be seen in Fig. 10, the two parts 2, 3 comprise each two brackets 7 arranged in the width direction and two further brackets 7 on the opposite side, i.e. perpendicular to the width direction and to the length direction of the air channel 20.

Depending on the width of the two parts 2, 3 in a direction perpendicular to the flow of air through the air channels 20, it is possible that part 3 comprises more than two brackets 7.

Thus, when the two parts 2, 3 are connected to each other and the inclined or sloped outer surface 17 of the second part 2 is pulled against a correspondingly sloped inner surface of the second part 3 (as seen in Fig. 3 to 6), the pulling forces are distributed around the circumference so that the risk of leakages of the air flowing through the air channel 20 is basically reduced to zero.

The first part 2 comprises a number of protrusions 5 corresponding to the number of brackets 7 of the second part.

As can be seen, the first part 2 comprises also brackets 7 and the second part 3 comprises also protrusions 5, so that a plurality of such parts can be arranged one behind another and can be connected to each other.

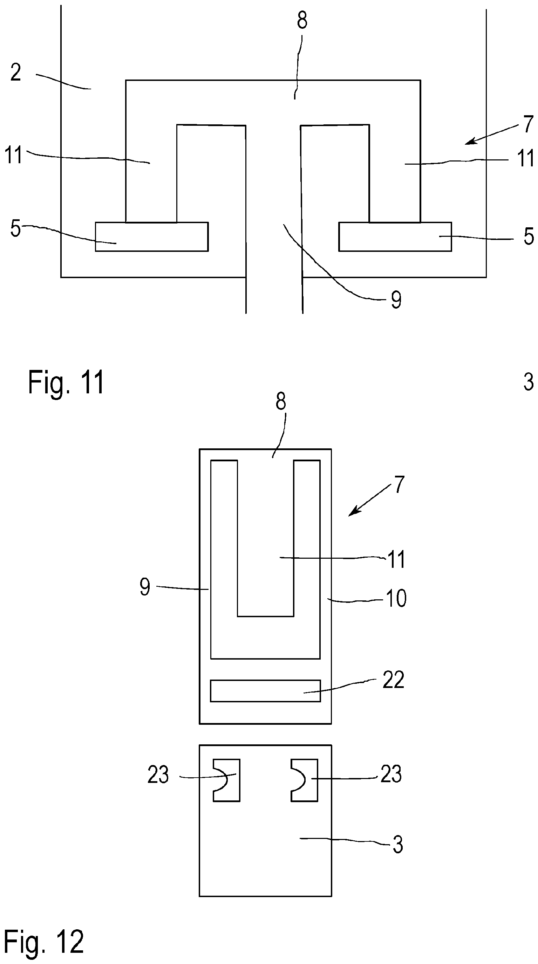

Fig. 11 shows a second embodiment of a bracket 7. In this embodiment the base 8 is connected to the second part 3 by only one leg 9. The base 8 is connected to two tongues 11a, 11b and the first part 2 comprises two protrusions 5a, 5b.

The function of this bracket is the same as in the embodiment shown in Fig. 1 to 6. Since there are two tongues 11a, 11b, which are symmetrically arranged on both sides of the leg 9, there is an equilibrium of forces acting transversely on the leg 9.

Fig. 12 shows a third embodiment in which the bracket 7 can be separated from the first part 3.

The bracket 7 comprises a slot 22 (or another arrangement of an opening or a plurality of openings) so that the bracket 7 can be hooked into hooks 23 provided on the second part 3. The hooks 23 are shown schematically only. They allow a connection between the bracket 7 and the second part 3 which is able to absorb forces in the longitudinal direction of the tongue 11. In Fig. 12 the protrusion interacting with the tongue 11 is not shown, but the basic snap connection is the same as shown in the previous Figures.

## Claims

1. Assembly (1) of a first part (2) and a second part (3) connected to each other, wherein the first part (2) comprises on an outer surface (4) at least one protrusion (5) each having an abutment surface (6) on a side opposite the second part (3) and the second part (3) comprises a bracket (7), **characterized in that** the bracket (7) comprises a base (8) connected to the second (3) part by at least one leg (9, 10), wherein at least one tongue (11) extends from the base (8) towards the second part (3), an end of the at least one tongue (11) remote from the base (8) rests against the at least one abutment surface (6), and a distance between an end of the base (8) directed towards the second part (3) and the at least one abutment surface (6) is smaller than the length of the at least one tongue (11) in an unmounted condition.

2. Assembly according to claim 1, **characterized in that** the bracket (7) is integrally formed with the second part (3).

3. Assembly according to claim 1 or 2, **characterized in that** in an unconnected state the tongue (11) is coplanar with the at least one leg (9, 10).

4. Assembly according to any of claims 1 to 3, **characterized in that** in an unconnected state the tongue (11) can be bent in two directions with respect to the base (8) and in particular in a connected stat of the first part (2) and the second part (3) the tongue (11) is curved.

5. Assembly according to any of claims 1 to 4, **characterized in that** the at least one leg (9, 10) can be bent.

6. Assembly according to any of claims 1 to 5, **characterized in that** the first part (2) and the second part (3) comprise a stop arrangement (14) defining a predetermined position of the base (8) in relation to the abutment surface (6) in a connected state of the two parts (2, 3).

7. Assembly according to any of claims 1 to 6, **characterized in that** the abutment surface (6) comprises a hangout (15) and the abutment surface (6) is arranged between the hangout (15) and the outer surface (4) of the first part (2).

8. Assembly according to any of claims 1 to 7, **characterized in that** the abutment surface (6) is inclined towards the second part (3).

9. Assembly according to any of claims 1 to 8, **characterized in that** the first part (2) and the second part (3) comprise an overlapping area (13), wherein an inner surface of one of the parts and an outer surface of the other part are beveled to match each other.

10. Assembly according to any of claims 1 to 9, **characterized in that** the first part (2) comprises a wall (19) on the outer surface (4) surrounding at least the base (8).

11. Assembly according to claim 10, **characterized in that** the wall is formed by a border of a recess.

12. Assembly according to any of claims 1 to 11, **characterized in that** the base (8) comprises a depression (18) on a side facing the outer surface (4) of the first part (2), which depression (18) is accessible from the outside.

13. Air duct system comprising an assembly according to any of claims 1 to 12.

14. Air duct system according to claim 13, **characterized in that** the two parts (2, 3) are air modules.

15. Air duct system according to claim 13 or 14, **characterized in that** the connection between the two parts (2, 3) is airtight.
